# FASCICULE DE BREVET EUROPEEN

(11) **EP 0 961 887 B1**
(45) Date de publication et mention de la délivrance du brevet: **19.11.2003**
(21) Numéro de dépôt: 98963585.9
(22) Date de dépôt: 22.12.1998
(51) Int. Cl.: F16F 15/134, F16F 1/12, F16F 3/04

(54) **DISPOSITIF ELASTIQUE D'ORIENTATION RADIALE POUR UN VOLANT AMORTISSEUR DOUBLE DE TRANSMISSION DE VEHICULE AUTOMOBILE**
RADIAL ORIENTIERTE, ELASTISCHE VORRICHTUNG FÜR EIN ZWEIMASSENSCHWUNGRAD FÜR DIE ANTRIEBSKETTE EINES KRAFTFAHRZEUGES
RADIALLY ORIENTED ELASTIC DEVICE FOR MOTOR VEHICLE TRANSMISSION DOUBLE DAMPER FLYWHEEL

(30) Priorité: 23.12.1997 FR 9716365
(43) Date de publication de la demande: 08.12.1999
(73) Titulaire: VALEO EMBRAYAGES s.a.s., 80009 Amiens Cedex 1 (FR)
(72) Inventeur: TARDIVEAU, Christophe, F-75018 Paris (FR); GRIECO, Giovanni, F-92700 Paris (FR)
(74) Mandataire: Lemaire, Marc
(86) Numéro de dépôt international: FR9802818
(87) Numéro de publication internationale: WO99034131

(56) Documents cités:
- WO-A-94/27062
- FR-A- 2 724 210
- FR-A- 2 742 506
- US-A- 3 885 778

## Description

La présente invention concerne un dispositif élastique pour un double volant amortisseur destiné à être implanté radialement pour accoupler élastiquement les deux masses tournantes du volant.

L'invention concerne plus particulièrement un dispositif élastique pour un double volant amortisseur pour véhicule automobile comportant une première masse tournante propre à être liée en rotation à un arbre menant, une deuxième masse tournante montée tourillonnante sur la première masse à l'aide d'un palier et adaptée à former le plateau de réaction d'un embrayage à friction propre à être lié en rotation de manière débrayable à un arbre mené, et une série de dispositifs élastiques implantés selon une direction générale radiale pour accoupler élastiquement la seconde masse tournante à la première masse tournante, chacun des dispositifs élastiques étant monté à articulation, d'une part sur la première masse tournante par l'intermédiaire d'un premier axe parallèle à l'axe de rotation du volant, et d'autre part sur la seconde masse tournante par l'intermédiaire d'un second axe, parallèle au premier axe.

Un exemple d'une telle conception est par exemple décrit et représenté dans les documents WO-A-94/27.062 et FR-A-2.742.506.

Dans le document WO-A-94/27.062, chaque dispositif élastique est du type comportant un ressort susceptible d'être comprimé axialement entre deux éléments télescopiques comprenant :
- un premier élément comportant une première tête, pour son articulation sur une première masse tournante, qui se prolonge axialement par une tige centrale qui traverse le ressort et qui se termine par une première rondelle d'appui qui s'étend radialement vers l'extérieur en regard d'une première extrémité du ressort ; et
- un second élément comportant une seconde tête, pour son articulation sur la seconde masse tournante, qui se prolonge axialement par un corps externe de forme générale tubulaire qui entoure le ressort et qui se termine par une seconde rondelle d'appui qui s'étend radialement vers l'intérieur en regard de la seconde extrémité du ressort et qui est traversée par la tige centrale du premier élément.

Chacun des deux éléments télescopiques comprend une tête d'articulation de l'élément sur une masse tournante associée appartenant au double volant amortisseur et le corps de chaque tête d'articulation comporte un trou, dont l'axe est perpendiculaire à la direction de déplacement relative des deux éléments, qui reçoit un tronçon du corps d'un axe d'articulation.

Selon une conception connue, chaque trou d'une tête peut être équipé d'une virole formant palier de rotation en matériau rigide ou quasi rigide, c'est-à-dire qui ne se déforme pas élastiquement selon la direction radiale, et qui a pour fonction de faciliter la rotation sans frottement de chaque tête autour du corps de l'axe d'articulation correspondant.

Le montage de chaque dispositif élastique dans le double volant amortisseur est parfois difficile, compte tenu des tolérances de fabrication des différents composants, dans la mesure où il est très difficile de comprimer les ressorts contenus à l'intérieur de chaque dispositif pour en augmenter légèrement la longueur initiale afin de faciliter l'introduction des têtes sur les axes d'articulations.

De plus, il est par ailleurs souhaitable de disposer d'une capacité élastique supplémentaire selon la direction de coulissement télescopique, sans pour cela augmenter les dimensions globales de chaque dispositif élastique.

La présente invention a pour but de proposer une nouvelle conception des éléments télescopiques d'un dispositif élastique à action radiale, par exemple du type de celui décrit et représenté dans le document WO-A-94/27.062 qui présente des capacités élastiques accrues.

Dans ce but, l'invention propose un dispositif élastique selon la revendication 1.

Grâce à l'invention, le montage des têtes sur les axes d'articulation est aisé malgré les tolérances de fabrication. En outre, sans augmentation de l'encombrement, on bénéficie d'une capacité élastique supplémentaire. On évite ainsi tout coincement.

Selon d'autres caractéristiques de l'invention :
- la douille élastique est un anneau ondulé ;
- l'anneau ondulé est monté serré radialement à l'intérieur du trou de la tête d'articulation ;
- la douille élastique est une bague en matériau déformable élastiquement, notamment en matériau élastomère ;
- la bague comporte un corps annulaire cylindrique ajouré par des trous axiaux débouchants ;
- les trous axiaux débouchants sont répartis angulairement de manière régulière ;
- le corps de la bague est en matériau élastomère et est fixé par adhérisation à la paroi interne du trou de la tête d'articulation ;
- une virole formant palier de rotation est interposée entre la douille élastique et le corps de l'axe d'articulation ;
- la virole est montée serrée radialement à l'intérieur de l'anneau ondulé ;
- la virole est fixée par adhérisation au corps en matériau élastomère de la bague.

Grâce à l'invention, le dispositif élastique travaille dans de bonnes conditions sans risque de coincement puisque, grâce à la douille élastique, la tête concernée s'auto-positionne par rapport à son axe d'articulation.

D'autres caractéristiques et avantages de l'invention apparaîtront à la lecture de la description détaillée qui suit pour la compréhension de laquelle on se reportera au dessin annexé dans lequel :
- la figure 1 est une vue en section axiale longitudinale d'un premier exemple de réalisation d'un dispositif élastique selon l'invention, et
- la figure 2 est une vue similaire à la partie inférieure de la figure 1 qui illustre un second mode de réalisation de la douille élastique selon l'invention.

Dans la description qui va suivre, les composants identiques, similaires ou équivalents sont désignés par les mêmes chiffres de référence.

Selon une conception connue, par exemple par le document WO-A-94 127 062 précité, le dispositif élastique 10 illustré aux figures comporte une première tête d'articulation 12 agencée par exemple radialement vers l'intérieur de manière à permettre le montage articulé du dispositif élastique autour d'un axe Y-Y parallèle à l'axe général du double volant amortisseur destiné à être équipé de dispositifs élastique à action radiale 10.

Chaque première tête d'articulation 12 est montée articulée sur une seconde des deux masses tournantes d'un double volant amortisseur par l'intermédiaire d'un axe d'articulation non représenté qui est par exemple un rivet.

Chaque organe élastique 10 est aussi monté articulé sur une première masse tournante, radialement vers l'extérieur, au moyen d'une seconde tête d'articulation 14 qui est traversée par une tige d'articulation non représentée portée par la première masse tournante et d'axe Z-Z parallèle à l'axe Y-Y.

De par sa conception, chaque organe élastique 10 a tendance à rapprocher radialement l'une vers l'autre ses deux têtes d'articulation 12 et 14, c'est-à-dire à constituer globalement l'équivalent d'un ressort de traction qui tend à s'allonger lorsque les deux masses tournantes du double volant amortisseur tournent l'une par rapport à l'autre, les dispositifs élastiques 10 rappelant élastiquement les masses tournantes vers leur position angulaire de repos dans laquelle chaque dispositif 10 d'orientation globalement radiale, c'est-à-dire que la droite D passant par les axes Y-Y et Z-Z est globalement d'orientation radiale par rapport à l'axe du double volant amortisseur.

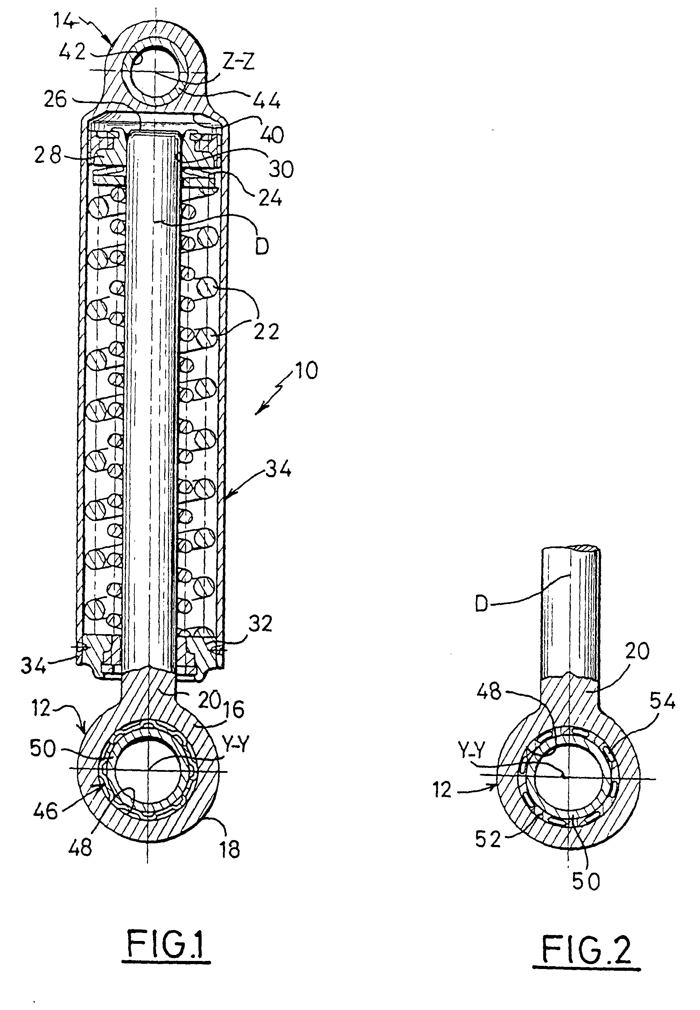

On décrira maintenant en détail la conception d'un dispositif élastique 10 en se reportant à la figure 1.

Le dispositif élastique 10 est constitué par deux éléments télescopiques susceptibles de coulisser axialement l'une par rapport à l'autre selon la droite D qui est l'axe géométrique de coulissement.

Le premier élément télescopique est constitué par la tête d'articulation 12 réalisée sous la forme d'un anneau 16 qui se prolonge radialement depuis sa surface périphérique cylindrique 18 par une tige massive 20 orientée selon la direction D de coulissement télescopique.

La tige 20 est par exemple réalisée venue de matière avec l'anneau d'articulation 12 et elle s'étend axialement à l'intérieur de deux ressorts de compression 22 et 24 de raideurs différentes, montés en série avec interposition d'une rondelle 23, qui constituent le ressort de du dispositif élastique 10. Le ressort 24, ici une rondelle Belleville, a une raideur plus grande que le ressort 22 consistant en deux ressort hélicoïdaux concentriques.

L'extrémité libre 26 de la tige 20 traverse une première rondelle d'appui 28, portant à sa périphérie externe à fixation au moyen d'un anneau ouvert (non référencé) un patin annulaire (non référencé) de glissement en matériaux à faible coefficient de frottement.

L'extrémité libre 26 est soudée dans le trou 30 de la première rondelle 28 qui constitue la première rondelle d'appui pour la première extrémité axiale supérieure des ressorts 22 et 24.

La seconde extrémité axiale inférieure des ressorts en série 22 et 24 est en appui axial contre l'une seconde rondelle d'appui 32. La rondelle 32 porte sa périphérie interne également un patin annulaire de glissement (non référencé) à faible coefficient de frottement pour contact avec la tige 20.

La seconde rondelle 32 est traversée par le corps de la tige 20.

La seconde rondelle 32 appartient au second élément télescopique 34 du dispositif élastique 10 qui comporte également la seconde tête d'articulation 14.

Le second élément 34 est un tube de guidage qui est une pièce métallique traitée dont les dimensions sont telles que la première rondelle 28 d'appui est reçue en coulissement à l'intérieur par l'intermédiaire de son patin annulaire de glissement.

La seconde rondelle d'appui 32 est par exemple sertie ou soudée au bord d'extrémité libre inférieure 36 du tube 34.

A son extrémité axiale supérieure opposée au bord 36, le corps tubulaire 34 se prolonge par un fond transversal 40 en regard duquel s'étend la première rondelle d'appui et qui se prolonge axialement vers le haut par une partie massive constituant la tête 14 qui comporte un trou 42 d'axe Z-Z qui reçoit une virole formant palier 44 qui, selon une conception connue est rigide, c'est à dire qu'elle n'est pratiquement pas déformable élastiquement selon la direction radiale.

Conformément à l'invention, la tête d'articulation 12 comporte une douille élastique qui est déformable selon la direction radiale et qui est montée dans un trou 48 de l'anneau 16 constituant la tête 12.

Dans le premier mode de réalisation illustré à la figure 1, la douille élastique est un anneau ondulé 46, constitué par exemple par un feuillard en métal ondulé et roulé, qui est monté légèrement serré selon la direction radiale à l'intérieur du trou 48 de manière à éviter les jeux parasites et à assurer aussi un maintien en place de l'anneau ondulé 46, selon la direction axiale Y-Y, dans la tête 12.

Pour le montage à rotation de la tête 12 munie de son anneau élastique ondulé 46 sur le corps d'un axe d'articulation (non représenté), il est aussi prévu une virole formant palier 50 qui est en matériau rigide, selon une conception connue et par exemple à faible coefficient de frottement, qui est elle-même montée serrée radialement à l'intérieur de l'anneau ondulé 46.

Conformément aux enseignements de l'invention, la douille élastique réalisée sous la forme de l'anneau ondulé 46 offre ainsi une possibilité de déformation élastique selon la direction radiale, c'est-à-dire que la position théorique de l'axe Y-Y par rapport au corps 16 de la tête 12 peut se déplacer légèrement selon la direction radiale, selon n'importe quelle orientation et aussi selon la direction D en cas de sollicitation en traction du dispositif 10 dans le sens correspondant à l'éloignement mutuel des têtes 12 et 14.

Dans ce second mode de réalisation, la douille élastique est réalisée sous la forme d'une bague 52 massive en matériau déformable élastiquement, par exemple en matériau élastomère, dont les capacités de déformation selon la direction radiale sont accrues grâce à une série de huit trous axiaux débouchants 54 qui sont formés dans le corps de la bague en matériau élastomère 52 et qui sont répartis angulairement de manière régulière autour de l'axe Y-Y, chaque trou 54 ayant par exemple une section en forme de haricot, comme on peut le voir à la figure 2.

Dans le cas où le corps de la bague élastique 52 est en un matériau élastomère, cette dernière peut être fixée par adhérisation dans le trou 48 et la virole formant palier 50 peut aussi être fixée par adhérisation à la surface cylindrique interne concave de la bague élastique 52.

Les avantages inhérents à la présence de la bague en matériau élastomère 52 sont les mêmes que ceux évoqués précédemment en référence à l'anneau ondulé 46.

Bien entendu, une bague entretoise non référencée est intercalée entre les deux ressorts 22, 24.

On notera que le ressort 24, qui peut être remplacé en variante par un ressort à boudin, est monté avec un jeu radial à l'intérieur du tube de guidage 34 et en fonctionnement ne vient donc pas en contact avec l'intérieur du tube 34. Quand les ressorts concentriques 22, de plus faible raideur, viennent à spires jointives, on bénéficie donc d'une capacité élastique supplémentaire procurée par le ressort 10 et également par la douille élastique selon l'invention. Ainsi, lorsque les ressorts 22 sont à spires jointives, on ne risque pas de tout casser et le tête concernée prend la bonne position grâce à la douille élastique.

Bien entendu, on peut inverser les structures, la tête 14 étant pourvue d'une douille élastique selon l'invention.

En variante, les deux têtes peuvent être pourvues, d'une telle douille. Dans tous les cas, on obtient un bon coulissement de la tige 20, même lorsque les ressorts 22 sont bloqués.

## Revendications

1. Dispositif élastique (10) pour un double volant amortisseur destiné à être implanté radialement pour accoupler élastiquement les deux masses tournantes du volant, du type comportant au moins un ressort (22, 24) comprimé axialement entre deux éléments télescopiques (20, 34) comprenant chacun une tête (12, 14) d'articulation de l'élément (23, 34) sur une masse tournante associée, et du type dans lequel le corps de chaque tête d'articulation comporte un trou (48, 42) qui reçoit un tronçon du corps d'un axe d'articulation, l'axe (Y-Y, Z-Z) du trou (48, 42) étant perpendiculaire à la direction (D) de déplacement relatif des deux éléments télescopiques, **caractérisé en ce que** l'une (12) au moins des deux têtes d'articulation (12, 14) comporte une douille élastique (46, 52), déformable selon la direction radiale, montée dans le trou (48) de cette tête (12).

2. Dispositif élastique selon la revendication 1, **caractérisé en ce que** la douille élastique (46) est un anneau ondulé.

3. Dispositif selon la revendication précédente, **caractérisé en ce que** l'anneau ondulé (46) est monté serré radialement à l'intérieur du trou (48) de la tête d'articulation (12).

4. Dispositif élastique selon la revendication 1, **caractérisé en ce que** la douille élastique (52) est une bague en matériau déformable élastiquement, notamment en matériau élastomère.

5. Dispositif élastique selon la revendication précédente, **caractérisé en ce que** la bague (52) comporte un corps annulaire cylindrique ajouré par des trous axiaux débouchants (54).

6. Dispositif élastique selon la revendication précédente, **caractérisé en ce que** les trous axiaux débouchants (54) sont répartis angulairement de manière régulière.

7. Dispositif élastique selon l'une quelconque des revendications 4 à 6, **caractérisé en ce que** le corps de la bague (52) est en matériau élastomère et est fixé par adhérisation à la paroi interne du trou (48) de la tête d'articulation (12).

8. Dispositif élastique selon l'une quelconque des revendications précédentes, **caractérisé en ce qu'**une virole (50) formant palier de rotation est interposée entre la douille élastique (46, 52) et le corps de l'axe d'articulation.

9. Dispositif élastique selon la revendication précédente prise en combinaison avec l'une des revendications 2 ou 3, **caractérisé en ce que** la virole (50) est montée serrée radialement à l'intérieur de l'anneau ondulé (46).

10. Dispositif élastique selon la revendication 8 prise en combinaison avec la revendication 7, **caractérisé en ce que** la virole (50) est fixée par adhérisation au corps en matériau élastomère de la bague (52).

## Patentansprüche

1. Elastische Vorrichtung (10) für ein Zweimassen-Dämpfungsschwungrad, die für eine radiale Anordnung zur elastischen Verbindung von zwei umlaufenden Massen des Zweimassenschwungrads bestimmt ist, umfassend wenigstens eine Feder (22, 24), die axial zwischen zwei Teleskopelementen (20, 34) zusammengedrückt wird, die jeweils einen Gelenkkopf (12, 14) zur Anlenkung des Elements (20, 34) an einer zugehörigen umlaufenden Masse umfassen, wobei der Körper jedes Gelenkkopfes ein Loch (48, 42) enthält, das ein Teilstück des Körpers einer Gelenkachse aufnimmt, wobei die Achse (Y-Y, Z-Z) des Lochs (48, 42) senkrecht zur Richtung (D) der relativen Verschiebung der zwei Teleskopelemente verläuft und, **dadurch gekennzeichnet, dass** wenigstens einer (12) der zwei Gelenkköpfe (12, 14) eine in radialer Richtung verformbare elastische Hülse (46, 52) umfasst, die in das Loch (48) dieses Kopfes (12) eingesetzt ist.

2. Elastische Vorrichtung nach Anspruch 1, **dadurch gekennzeichnet, dass** die elastische Hülse (46) ein gewellter Ring ist.

3. Elastische Vorrichtung nach dem vorangehenden Anspruch, **dadurch gekennzeichnet, dass** der gewellte Ring (46) radial im innern des Lochs (48) des Gelenkkopfes (12) eingespannt gelagert ist.

4. Elastische Vorrichtung nach Anspruch 1, **dadurch gekennzeichnet, dass** die elastische Hülse (52) eine Buchse aus elastisch verformbarem Material, insbesondere aus Elastomermaterial, ist.

5. Elastische Vorrichtung nach dem vorangehenden Anspruch, **dadurch gekennzeichnet, dass** die Buchse (52) einen ringförmigen zylindrischen Körper umfasst, der durch durchgehende axiale Löcher (54) durchbrochen ist.

6. Elastische Vorrichtung nach dem vorangehenden Anspruch, **dadurch gekennzeichnet dass** die durchgehenden axialen Löcher (54) gleichmäßig winklig verteilt sind.

7. Elastische Vorrichtung nach einem der Ansprüche 4 bis 6, **dadurch gekennzeichnet, dass** der Körper der Buchse (52) aus Elastomermaterial ausgeführt und durch eine Haftverbindung an der innenwand des Lochs (48) des Gelenkkopfes (12) befestigt ist.

8. Elastische Vorrichtung nach einem der vorangehenden Ansprüche, **dadurch gekennzeichnet, dass** ein als Drehlager dienender Ring (50) zwischen der elastischen Hülse (46, 52) und dem Körper der Gelenkachse eingefügt ist.

9. Elastische Vorrichtung nach dem vorangehenden Anspruch in Kombination mit einem der Ansprüche 2 oder 3, **dadurch gekennzeichnet, dass** der Ring (50) radial im Innem des gewellten Rings (46) eingespannt gelagert ist.

10. Elastische Vorrichtung nach Anspruch 8 in Kombination mit Anspruch 7, **dadurch gekennzeichnet, dass** der Ring (50) durch eine Haftverbindung an dem aus Elastomermaterial ausgeführten Körper der Buchse (52) befestigt ist.

## Claims

1. Elastic device (10) for a double damping flywheel intended to be located radially in order to elastically couple the two rotating masses of the flywheel, of the type having at least one spring (22, 24) compressed axially between two telescopic elements (20, 34) each comprising a head (12, 14) for articulation of the element (23, 34) on an associated rotating mass, and of the type in which the body of each articulation head has a hole (48, 42) which receives a portion of the body of an articulation shaft, the axis (Y-Y, Z-Z) of the hole (48, 42) being perpendicular to the direction (D) of relative movement of the two telescopic elements, **characterised in that** at least one (12) of the two articulation heads (12, 14) has an elastic sleeve (46, 52), deformable in the radial direction, mounted in the hole in this head (12).

2. Elastic device according to Claim 1, **characterised in that** the elastic sleeve (46) is a corrugated annulus.

3. Device according to the preceding claim, **characterised in that** the corrugated annulus (46) is mounted so as to be clamped radially inside the hole (48) in the articulation head (12).

4. Elastic device according to Claim 1, **characterised in that** the elastic sleeve (52) is a ring made of elastically deformable material, notably elastomer material.

5. Elastic device according to the preceding claim, **characterised in that** the ring (52) has a cylindrical annular body with through axial holes (54) in it.

6. Elastic device according to the preceding claim, **characterised in that** the through axial holes (54) are regularly distributed angularly.

7. Elastic device according to any one of Claims 4 to 6, **characterised in that** the body of the ring (52) is made of elastomer material and is fixed by adhesion to the internal wall of the hole (48) in the articulation head (12).

8. Elastic device according to any one of the preceding claims, **characterised in that** a hoop (50) forming a rotation bearing is interposed between the elastic sleeve (46, 52) and the body of the articulation shaft.

9. Elastic device according to the preceding claim taken in combination with one of Claims 2 or 3, **characterised in that** the hoop (50) is mounted clamped radially inside the corrugated annulus (46).

10. Elastic device according to Claim 8 taken in combination with Claim 7, **characterised in that** the hoop (50) is fixed by adhesion to the body of the ring (52) made from elastomer material.
